# EUROPÄISCHE PATENTSCHRIFT

(11) **EP 3 117 248 B1**
(45) Veröffentlichungstag und Bekanntmachung des Hinweises auf die Patenterteilung: **26.04.2023**
(21) Anmeldenummer: 15707631.6
(22) Anmeldetag: 03.03.2015
(51) Int. Cl.: G02B 5/02, G02F 1/1335, F21V 8/00, D21H 27/06

(54) **ELEMENT ZUR LICHTMANIPULATION**
ELEMENT FOR MANIPULATING LIGHT
ÉLÉMENT DE MODIFICATION DE LA LUMIÈRE

(30) Priorität: 13.03.2014 DE 102014003418
(43) Veröffentlichungstag der Anmeldung: 18.01.2017
(73) Patentinhaber: Carl Freudenberg KG, 69469 Weinheim (DE)
(72) Erfinder: WAGNER, Rudolf, 79379 Müllheim (DE); FREY, Günter, 79418 Schliengen (DE); MAREK, Klaus, 72076 Tübingen (DE); GREINER, Armin, 69469 Weinheim (DE); BIALEK, Jochen, 68549 Ilvesheim (DE)
(86) Internationale Anmeldenummer: PCT/EP2015/054354
(87) Internationale Veröffentlichungsnummer: WO 2015/135790

(56) Entgegenhaltungen:
- WO-A1-01/18312
- WO-A1-2006/105836
- WO-A1-2013/120599
- DE-A1- 19 942 989
- US-A1- 2009 279 018

## Beschreibung

Die Erfindung betrifft die Verwendung eines Vliesstoffs als Lichtverteilungselement sowie eine Lichtquelle umfassend ein derartiges Lichtverteilungselement.

Punktförmige Lichtquellen, wie zum Beispiel LED-Lampen, sind in vielen Anwendungen eine energieeffiziente Beleuchtungsmethode. Gleichzeitig ist es jedoch in vielen Fällen erwünscht eine Fläche oder einen Raum möglichst homogen, mit gleichmäßig verteilter Lichtstärke zu beleuchten. Um dieses Ziel zu erreichen, können verschiedene Verteilungs- und/oder Diffusionsmedien, wie zum Beispiel Papiere, optische Spezialfolien, oder Textilien eingesetzt werden. Neben einer gleichmäßigen Lichtverteilung sind in vielen Anwendungen weitere Lichtmanipulationen, wie zum Beispiel eine Kollimation des Lichts oder ein bestimmtes Verhältnis von Reflexion und Transmission erwünscht.

Papiere stellen sehr kostengünstige Diffusionselemente dar, die jedoch nur eine geringe Leuchtdichte haben. Mit der Verwendung optischer Spezialfolien können deutlich höhere Leuchtdichten erzielt werden. Nachteilig an ihnen ist jedoch, dass sie in der Regel nur aus einer Materialart bestehen. Für die Lichtmanipulation ist es jedoch oft notwendig Materialien mit unterschiedlichen Brechungsindices und anderen Eigenschaften in sehr kurzen Abständen zusammenzuführen. Durch den Einbau von Additiven, der Durchführung nachträglicher Oberflächenbehandlungen oder der Laminierung mehrerer Schichten können Folien zwar auf spezifische optische Eigenschaften eingestellt werden, jedoch bedarf dies weiterer kostenintensiver Prozessschritte. Im Falle mehrlagiger Spezialfolien ergibt sich ferner insbesondere unter Hitzeeinwirkung zusätzlich das Problem der potentiellen Delaminierung oder Deformierung aufgrund unterschiedlicher Wärmeausdehnungskoeffizienten der verwendeten Materialien.

Vor diesem Hintergrund hat sich die Verwendung von textilen Materialien, und insbesondere Vliesstoffen als Lichtverteilungselemente als günstig erwiesen, da die verschiedensten strukturellen und stofflichen Zusammensetzungen auf einfache Weise durch eine geeignete Auswahl von Fasermischung, Vlieslegung und Vliesverfestigung in einem Prozessablauf erzeugt werden können. Hierdurch können bei guter Performance die Herstellungskosten verglichen mit anderen Diffusionsmedien gering gehalten werden.

Aus der WO 2013/012974 A1 ist eine Lichtquelle bekannt, die ein Leuchtmittel, eine Lichtführungsplatte und eine Diffusionsplatte umfasst. Die Diffusionsplatte kann aus einem Vliesstoff mit einem bestimmten Flächengewicht bestehen.

In der WO 2013/116193 A1 ist ein Anzeigesystem beschrieben, in dem ein Diffusionselement aus Vliesstoff zwischen der Lichtquelle und dem LCD- Bildschirm angeordnet ist.

Die WO 2006/129246 A2 beschreibt eine Lichtquelle, die ein auf einem Substrat angeordnetes Leuchtmittel und ein Lichtverteilungselement aus Vliesstoff mit einer speziellen Dichteeinstellung aufweist.

In den genannten Druckschriften steht jeweils das Lichtsystem im Vordergrund. In Bezug auf die Einstellung der Vliesstoffeigenschaften zur Optimierung der Lichtdiffusionseigenschaften finden sich nur einzelne Hinweise.

Der Erfindung liegt die Aufgabe zu Grunde ein Lichtverteilungselement mit besonders guten Lichtdiffusionseigenschaften bereitzustellen. Insbesondere soll das Lichtverteilungselement sehr gute Lichtintensitätsverteilungen punkt- und/oder linienförmiger Lichtquellen, wie beispielsweise LEDs und/oder CCFLs mit einer preiswerten Herstellung kombinieren.

Diese Aufgabe wird erfindungsgemäß dadurch gelöst, dass ein Nassvliesstoff umfassend
a1) 5-50 Gew.% Matrixfasern und
a2) 50-95 Gew.% zumindest teilweise thermisch verschmolzene Bindefasern
als Lichtverteilungselement eingesetzt wird.

Erfindungsgemäß wurde gefunden, dass Nassvliesstoffe mit einem hohen Anteil, von mindestens 50 Gew.% Bindefasern hervorragend als Lichtverteilungselemente geeignet sind. Die Matrixfasern und Bindefasern sind erfindungsgemäß Stapelfasern. Erfindungsgemäß sind unter Stapelfasern, im Unterschied zu Filamenten, die eine theoretisch unbegrenzte Länge aufweisen, Fasern mit einer begrenzten Länge, von vorzugsweise 1 mm bis 30 mm zu verstehen.

Mit den erfindungsgemäßen Vliesstoffen können überraschend gute Lichtintensitätsverteilungen punktförmiger Lichtquellen, wie beispielsweise LEDs, erzielt werden. Ohne sich erfindungsgemäß auf einen Mechanismus festzulegen, wird vermutet, dass die hohen Leuchtdichten darauf zurückzuführen sind, dass die Vliesstoffe aufgrund ihrer Herstellung im Nasslegeverfahren eine äußerst homogene und isotrope Faserstruktur zeigen, die durch den hohen Anteil an zumindest zum Teil verschmolzenen Bindefasern und/oder Bindemittel sehr gleichmäßig verfestigt ist. Der hohe Anteil an Bindefasern und/oder Bindemittel ermöglicht zudem eine gute Oberflächeneinbindung der Fasern und eine gleichmäßige Durchbindung des Vliesstoffs über seinen Querschnitt, was sich ebenfalls vorteilhaft auf die Leuchtdichte auswirkt.

Erfindungsgemäß sind die Bindefasern zumindest zum Teil verschmolzen, was ebenfalls einen vorteilhaften Einfluss auf die Leuchtdichte hat. Die Bindefasern können Bereiche aufweisen, die verschmolzen sind und Bereiche, die nicht verschmolzen sind. Erfindungsgemäß bevorzugt liegen die Bindefasern an zumindest einigen Faserkreuzungen, vorzugsweise an zumindest 40 %, oder zumindest an 50 %, oder zumindest an 60 %, oder zumindest an 70 %, oder zumindest an 80 %, oder zumindest an 90 % der Kreuzungspunkten verschmolzen vor.

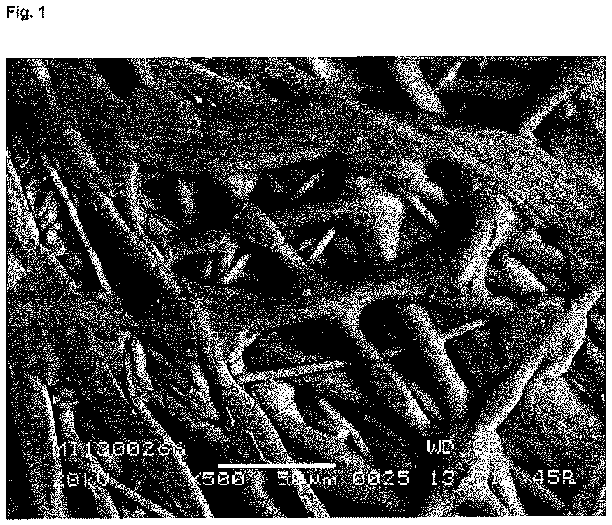

Praktische Versuche haben ergeben, dass besonders gute Lichtintensitätsverteilungen erhalten werden können, wenn der Vliesstoff Bindefasern aufweist, die, wie in der in Figur 1 illustrierten REM Aufnahme gezeigt, an zumindest einigen Faserkreuzungen in Form spannsegelartiger und/oder sphärischer Bereiche verschmolzen vorliegen. Die Art und Zusammensetzung der verschmolzenen Bereiche hängt von den eingesetzten Bindefasern sowie vom Herstellungsverfahren ab. Werden beispielsweise als Bindefasern Mehrkomponentenfasern mit bindenden und nicht bindenden Polymeranteilen eingesetzt, so werden die verschmolzenen Bereiche im Wesentlichen von den bindenden Polymeranteilen gebildet. Die verschmolzenen Bereiche können dabei an Kreuzungen von zwei oder mehr Bindefasern und/oder an Kreuzungen von Bindefasern mit Matrixfasern auftreten. Praktische Versuche haben erfindungsgemäß ergeben, dass sich das Vorhandensein der in Form spannsegelartiger und/oder sphärischer Bereiche verschmolzener Bindefasern vorteilhaft auf die Leuchtdichteverteilung das Vliesstoffs auswirkt.

Ohne sich erfindungsgemäß auf einen Mechanismus festzulegen, wird vermutet, dass diese Bereiche vorteilhaft als Lichtreflexionsflächen fungieren können. Aufgrund dessen kann die Leuchtdichteverteilung des Vliesstoffs durch Erhöhung des Anteils dieser verschmolzenen Bereiche erhöht werden. Vor diesem Hintergrund weisen vorzugsweise zumindest 40 %, oder zumindest 50 %, oder zumindest 60 %, oder zumindest 70 %, oder zumindest 80 %, oder zumindest 90 % oder im Wesentlichen sämtliche der Kreuzungspunkte von Bindefasern mit Bindefasern und/oder von Bindefasern mit Matrixfasern im Vliesstoff Bereiche auf, an denen die Bindefasern spannsegelartig und/oder sphärisch verschmolzen vorliegen.

Die Ausbildung der spannsegelartigen und/oder sphärischen Bereiche verschmolzener Bindefasern kann beispielsweise bei der thermischen Verfestigung mit Heißluft erfolgen. Dabei werden die Temperaturparameter und Verweilzeiten zweckmäßigerweise auf die Art der verwendeten Bindefasern und die gewünschte Anzahl bzw. Ausdehnung der verschmolzenen Bereiche abgestimmt.

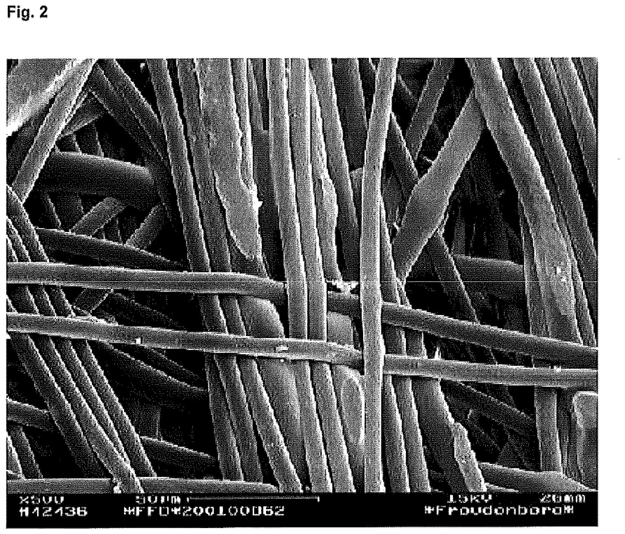

In Figur 2 ist zum Vergleich die Faserstruktur eines Vliesstoffs aus dem Stand der Technik illustriert, in dem keine flächigen Faserverschmelzungen vorliegen sondern in dem die Fasern lediglich aneinander kleben.

Erfindungsgemäß sind die Matrixfasern Stapelfasern. Diese können Mono- oder Mehrkomponentenfasern sein. Aus Kostengründen kann es bevorzugt sein Monokomponentenfasern einzusetzen. Die mittleren Faserlängen betragen vorteilhafter Weise 1 mm bis 30 mm, noch bevorzugter von 2 mm bis 12 mm und insbesondere von 3 mm bis 6 mm.

Erfindungsgemäß geeignete Matrixfasern sind Fasern mit einem Schmelzpunkt, der oberhalb des Schmelzpunkts der Bindefasern liegt.

Als Matrixfaser können erfindungsgemäß die verschiedensten Stapelfasern eingesetzt werden, beispielsweise Fasern die Polyacrylnitril, Polyvinylalkohol, Viskose-, Cellulose, Polyamide, insbesondere Polyamid 6 und Polyamid 6.6, bevorzugt Polyolefine und ganz besonders bevorzugt Polyester, insbesondere Polyethylenterephthalat, Polyethylennaphthalat und Polybutylenterephthalat, und/oder Gemische hiervon enthalten und/oder hieraus bestehen. Praktische Versuche haben ergeben, dass mit Polyamid, vorzugsweise Polyamid 6, Polyamid 66, Polyamid 46, Polyacrylnitril, Polycarbonat, Viskose und/oder Lyozell enthaltenden Fasern und insbesondere mit Fasern, die aus den vorgenannten Polymeren oder deren Gemischen bestehen, Vliesstoffe mit besonders guten Eigenschaften erhalten werden können.

Bei einem Nassvliesstoff, der einen Anteil an Bindefasern von mindestens 50 Gew.% aufweist beträgt der Anteil an Matrixfasern erfindungsgemäß 5 bis 50 Gew.%, vorzugsweise von 5 bis 20 Gew.% und insbesondere von 5 bis 10 Gew.%, jeweils bezogen auf das Gesamtgewicht des Vliesstoffs.

Der mittlere Titer der Matrixfasern kann in Abhängigkeit von der gewünschten Struktur des Vliesstoffs variieren. Als günstig hat sich insbesondere die Verwendung von Matrixfasern mit einem mittleren Titer von 0,06 bis 1,7 dtex, vorzugsweise von 0,1 bis 1,0 dtex erwiesen.

Praktische Versuche haben ergeben, dass die zumindest anteilige Verwendung von Mikrofasern mit einem mittleren Titer von weniger als 1 dtex, vorzugsweise von 0,1 bis 1 dtex als Matrixfasern sich vorteilhaft auf die Größe und Struktur der Porengrößen und inneren Oberfläche sowie auf die Dichte des Vliesstoffs auswirkt. Dabei haben sich Anteile von mindestens 5 Gew.%, vorzugsweise von 5 bis 10 Gew.%, jeweils bezogen auf die Gesamtmenge an Fasern, als besonders günstig erwiesen.

Als Bindefasern können die üblichen zu diesem Zweck verwendeten Stapelfasern eingesetzt werden sofern sie zumindest teilweise thermisch verschmolzen werden können. Bindefasern können einheitliche Fasern oder auch Mehrkomponentenfasern sein. Erfindungsgemäß besonders geeignete Bindefasern sind Fasern mit einem Schmelzpunkt, der unterhalb des Schmelzpunkts der zu bindenden Matrixfasern liegt, vorzugsweise unterhalb von 250°C insbesondere von 70 bis 230°C, besonders bevorzugt von 125 bis 200°C. Geeignete Fasern sind insbesondere thermoplastische Polyester und/oder Copolyester, insbesondere PBT, Polyolefine, insbesondere Polypropylen, Polyamide, Polyvinylalkohol, oder auch Copolymere sowie deren Copolymere und Gemische.

Erfindungsgemäß besonders geeignete Bindefasern sind Mehrkomponentenfasern, vorzugsweise Bikomponentenfasern, insbesondere Kern/Mantel-Fasern. Kern/Mantel-Fasern enthalten mindestens zwei Faserpolymere mit unterschiedlicher Erweichungs- und/oder Schmelztemperatur. Bevorzugt bestehen die Kern/Mantel-Fasern aus diesen zwei Faserpolymeren. Dabei ist diejenige Komponente, die die niedrigere Erweichungs- und/oder Schmelztemperatur aufweist, an der Faseroberfläche (Mantel) und diejenige Komponente, die die höhere Erweichungs- und/oder Schmelztemperatur aufweist, im Kern zu finden.

Bei Kern/Mantel-Fasern kann die Bindefunktion durch die Materialien, die an der Oberfläche der Fasern angeordnet sind, ausgeübt werden. Für den Mantel können die verschiedensten Materialien eingesetzt werden. Bevorzugte Materialien für den Mantel sind erfindungsgemäß Polybutylenterephthalat (PBT), Polyamid (PA), Polyethylen (PE), Copolyamide und/oder auch Copolyester. Für den Kern können ebenfalls die verschiedensten Materialien eingesetzt werden. Bevorzugte Materialien für den Kern sind erfindungsgemäß Polyester (PES), insbesondere Polyetylenterephthalat (PET) und/oder Polyethylennaphthalat (PEN) und/oder Polyolefine (PO).

Die Verwendung von Kern-Mantel-Bindefasern ist erfindungsgemäß bevorzugt, da so eine besonders homogene Verteilung der Bindemittelkomponente im Vliesstoff erzielt werden kann.

In praktischen Versuchen konnten mit PET-PBT-Bikomponentenfasern und/oder PET-CoPES-Bikomponentenfasern Vliesstoffe mit sehr guten Eigenschaften erhalten werden. Ebenfalls gute Ergebnisse konnten mit Fasern aus der Klasse der Polyolefine, wie insbesondere Polyethylen-Polypropylen-Bikomponentenfasern erzielt werden. Ebenfalls geeignet könnten PEN-PET-Bikomponentenfasern sein.

Ebenfalls denkbar ist jedoch auch die Verwendung von Monokomponenten Bindefasern, sofern diese zumindest teilweise thermisch verschmolzen werden können. Die Wahl der Monokomponenten Bindefasern hängt dabei von der eingesetzten Matrixfaser ab. Beispielsweise eignen sich Polyamid 6 Bindefasern für die Bindung von Polyamid 66 Matrixfasern und Copolyester für die Bindung von Polyetylenterephthalat.

Die mittleren Faserlängen der Bindefasern betragen vorteilhafter Weise 1 mm bis 30 mm, noch bevorzugter von 1,5 mm bis 12 mm und insbesondere von 3,0 mm bis 6,0 mm.

Der Anteil an Bindefasern beträgt erfindungsgemäß 50 bis 95 Gew.%, vorzugsweise von 80 bis 95 Gew.% und insbesondere von 90 bis 95 Gew.% jeweils bezogen auf das Gesamtgewicht des Vliesstoffs.

Der mittlere Titer der Bindefasern kann in Abhängigkeit von der gewünschten Struktur des Vliesstoffs variieren. Als günstig hat sich die Verwendung von Bindefasern mit einem mittleren Titer von 0,2 bis 2,2 dtex, vorzugsweise von 0,8 bis 1,3 dtex erwiesen. Die Bindefasern können durch eine Thermofusion untereinander und/oder mit den Matrixfasern des Vliesstoffs verbunden werden. Als besonders geeignet hat sich die Verfestigung mittels durchströmender Heißluft in einem Heißluftbandofen und/oder auf einer von heißer Luft durchströmten Trommel erwiesen. Hierdurch können sich erfindungsgemäß spannsegelartige und/oder sphärische Bereiche verschmolzener Bindefasern ausbilden.

Die Dickenkalibrierung kann zwischen 2 glatten Kalanderwalzen eingestellt werden.

Die zur Herstellung des Vliesstoffs eingesetzten Fasern können grundsätzlich verschiedene Farben aufweisen. Gemäß einer bevorzugten Ausführungsform der Erfindung werden jedoch weiße Fasern eingesetzt.

Der Querschnitt der Fasern, unabhängig davon, ob Homofil- oder Mehrkomponentenfasern vorliegen, kann rund, oval, oberflächlich gerillt, sternchenförmig, bändchenförmig, tri- oder multilobal ausgebildet sein. Erfindungsgemäß bevorzugt ist der Querschnitt der Fasern rund ausgebildet.

Die den erfindungsgemäßen Nassvliesstoff aufbauenden Fasern können mechanisch oder aerodynamisch gereckt oder verstreckt worden sein. An der Verwendung derartiger Fasern ist vorteilhaft, dass orientierte Fasern einen höheren E-Modul und somit eine zugsweise höhere Festigkeit aufweisen. Es ist auch denkbar, den verstreckten Fasern solche entweder des gleichen oder unterschiedlichen Polymeraufbaues zuzumischen, die nur teilweise (partiell) oder überhaupt nicht verstreckt worden sind.

Die mit den erfindungsgemäßen Verfahren hergestellten Nassvliesstoffe sind mittels thermischer Bindung, insbesondere durch den Einsatz von Bindefasern gebunden. Denkbar ist aber auch, dass die Nassvliesstoffe zusätzlich chemisch verfestigt sind. In dieser Ausführungsform der Erfindung beträgt der Mengenanteil des Bindemittels mindestens 20 Gew.%, vorzugsweise von 30 bis 50 Gew.%.

Als zusätzliche Bindemittel haben sich insbesondere Acrylatpolymere als geeignet erwiesen, da diese eine besonders gute Lichtbeständigkeit haben. Besonders bevorzugt sind dabei Polyacrylsäureester, die aus Estern der Acrylsäure hergestellt werden. Wie dem Fachmann bekannt ist, können Polyacrylsäureester über radikalische Kettenpolymerisation in wässrigen Lösungen, Emulsionen (Emulsionspolymerisation) oder durch Substanzpolymerisation mit einem Endprodukt als Pulver hergestellt werden.

Praktische Versuche haben ergeben, dass hydrophile Bindemittel in Kombination mit den erfindungsgemäß bevorzugten Matrixfasern besonders geeignet sind, da sie besonders flächige Spannsegel an den Kreuzungspunkten von Fasern ausbilden können, was sich vorteilhaft auf die Lichtverteilungseigenschaften des Vliesstoffs auswirkt. Wie dem Fachmann bekannt ist, kann die Hydrophilie eines Bindemittels beispielsweise dadurch erhöht werden, dass Benetzungsmittel zugegeben werden, beispielsweise um die Binderverteilung zu beeinflussen. Durch die Gegenwart von Emulgatoren bzw. Netzmitteln in der Bindemitteldispersion wird die Oberflächenspannung erniedrigt, die Netzfähigkeit des Bindemittels nimmt zu und die filmbildenden Eigenschaften werden dadurch verbessert. Es ergibt sich damit eine große Neigung zur Spannsegelbildung an den Faserkreuzungen.

Unter einem Benetzungsmittel sind natürliche oder synthetische Stoffe zu verstehen, die in Lösung oder in Mischungen Oberflächenspannungen von Wasser oder anderen Flüssigkeiten herabsetzen, so dass diese besser in Oberflächen fester Körper eindringen und sie unter Verdrängung von Luft durchtränken und benetzen können.

Bevorzugt wird ein Benetzungsmittel ausgewählt aus der Gruppe bestehend aus: Ethylenoxid/Fett-Alkoholether, Fettsäure-Ethoxylaten, Sulfonate, Aryl-Sulfonsäuren, Phosphorsäureester-Glykolether.

Gemäß einer bevorzugten Ausführungsform der Erfindung enthält das Bindemittel mindestens ein Benetzungsmittel in einer Menge von mindestens 0,5 Gew.%, vorzugsweise von 0,5 Gew.% bis 5 Gew.%, noch bevorzugter von 0,5 Gew.% bis 3 Gew.% oder von 1 Gew.% bis 3 Gew, noch bevorzugter von 0,5 Gew.%, bis 2 Gew.%, oder von 1 Gew.%, bis 2 Gew.%, noch bevorzugter von 0,5 Gew.% bis 1,5 Gew.% oder von 1 Gew.% bis 1,5 Gew.%, jeweils bezogen auf die Gesamtmenge des Bindemittels.

Die zur Herstellung des Vliesstoffs eingesetzten Polymere können zumindest ein Additiv, ausgewählt aus der Gruppe bestehend aus Farbpigmenten, Antistatika, oder Hydrophilierungs- oder Hydrophobierungs -Additive in einer Menge von 150 ppm bis 10 Gew.%, enthalten. Die Verwendung der genannten Additive in den eingesetzten Polymeren gestattet die Anpassung an kundenspezifische Anforderungen.

Zur Steuerung der Diffusionseigenschaften des Vliesstoffs können die Matrix- und/oder Bindefasern ferner Mattierungsmittel, wie Titandioxid, enthalten. Zu diesem Zweck haben sich insbesondere Anteile von 150 ppm bis 10 Gew.%, Mattierungsmittel, bezogen auf das Gesamtgewicht des Vliesstoffs, als zweckmäßig erwiesen.

Denkbar ist ferner den Vliesstoff flammenhemmend auszurüsten, beispielsweise mit einem Phosphonsäurederivat. Hierdurch kann die Brandgefahr bei Kontakt mit heißen Lichtquellen verringert werden.

Grundsätzlich ist denkbar den Vliesstoff in Form eines Lagenverbunds einzusetzen. So könnten die weiteren Lagen als Verstärkungslagen, beispielsweise in Form eines Scrims ausgebildet sein und/oder Verstärkungsfilamente, Vliesstoffe, Gewebe, Gewirke und/oder Gelege umfassen. Erfindungsgemäß bevorzugt weist der Vliesstoff jedoch einen einschichtigen Aufbau auf, da hierdurch optische Störungen durch Grenzflächenübergänge vermieden werden können.

Um optische Störungen zu vermeiden, ist erfindungsgemäß weiter bevorzugt, dass der Vliesstoff eine im wesentlichen ebene Oberfläche aufweist. Gemäß einer besonders bevorzugten Ausführungsform der Erfindung weist der Vliesstoff eine derart ebene Oberfläche auf, dass drei willkürlich genommene Proben des Vliesstoffs eine Abweichung in ihrer Dicke, gemessen nach Prüfvorschrift EN 29073 - T2 von höchstens 15 % noch bevorzugter von höchstens 10 % aufweisen.

Die Flächengewichte des erfindungsgemäßen Vliesstoffs können in Abhängigkeit von dem speziellen Anwendungszweck eingestellt werden. Gemäß einer bevorzugten Ausführungsform der Erfindung beträgt das Flächengewicht des Vliesstoffs, gemessen nach DIN EN 29073, vorteilhafter Weise von 50 bis 160 g/m², insbesondere von 70 bis 140 g/m². Es hat sich gezeigt, dass bei diesen Gewichtsbereichen genügend Fasermasse vorhanden ist, um einen Vliesstoff mit ausreichender Eigensteifigkeit und einer planen Lage (kein Schüsseln) zu erhalten. Auch in diesem Zusammenhang ist es vorteilhaft, wenn der Vliesstoff einen einschichtigen Aufbau aufweist. Einschichtige Vliesstoffe zeigen nämlich nur eine geringe Schüsselneigung, da keine Lagenspannungen auftreten.

Die Dicke des Vliesstoffs gemessen nach Prüfvorschrift EN 29073 - T2 beträgt vorzugsweise von 60 bis 180 µm und insbesondere von 80 bis 140 µm.

Praktische Versuche haben ergeben, dass die Leuchtdichteverteilung verbessert werden kann, indem die Dichte des Vliesstoffs erhöht wird. Vor diesem Hintergrund beträgt die Dichte des Vliesstoffs (Rohdichte berechnet aus Flächengewicht und Dicke) vorzugsweise mindestens 0,4 g/cm³, beispielsweise 0,4 bis 1 g/cm³, und noch bevorzugter von 0,6 bis 0,9 g/cm³. Die Dichte des Vliesstoffs kann beispielsweise durch Verdichtungs-/Kalandrierschritte bei der Herstellung das Vliesstoffs erhöht werden.

Gemäß einer bevorzugten Ausführungsform der Erfindung weist der Vliesstoff Luftdurchlässigkeiten gemäß EN ISO 9237 bei einem Normklima gemäß DIN 50014 / ISO 554 von 10 bis 600 dm³/s*m² auf.

Die Porosität des Vliesstoffs, berechnet aus der Dicke, dem Gewicht und den Dichten der verwendeten Materialien (P =(1 - FG/(d·& δ))·100 wobei FG das Flächengewicht in kg/m², d die Dicke in m und δ die Dichte in kg/m³ ist) beträgt vorzugsweise von 40 bis 60 %.

Der erfindungsgemäße Vliesstoff ist ein Nassvliesstoff, der mit einem Nasslegeverfahren hergestellt werden kann. Um einen möglichst homogenen und isotropen Vliesstoff zu erhalten, ist es von Vorteil, wenn die Fasern vor der Faserlegung gut durchmischt und gleichmäßig verteilt werden.

Der erfindungsgemäße Nassvliesstoff kann durch ein Verfahren hergestellt werden, das folgende Schritte umfasst:
- Bildung einer wässrigen Faserdispersion durch Dispergieren einer Fasermischung umfassend Matrixfasern und Bindefasern, in einem wässrigen Medium;
- Entwässerung der Faserdispersion unter Ausbildung eines Nassvlieses;
- Trocknen, thermisch binden und Kalandrieren des Nassvlieses, um dieses zu einem Nassvliesstoff zu verfestigen und dessen Dicke einzustellen.

Die Bildung der wässrigen Faserdispersion kann auf im Bereich der Nassvliesstoffherstellung übliche Art und Weise durch Mischen der Fasern mit Wasser erfolgen.

Zur Bildung der Faserdispersion werden die Bindefasern und Matrixfasern, vorzugsweise jeweils in einer solchen Menge eingesetzt, dass das Verhältnis von Bindefasern und Matrixfasern in der Faserdispersion von 1:1 bis zu 20:1, vorzugsweise von 5:1 bis zu 10:1 beträgt.

Die Faserdispersion kann neben den Bindefasern und Matrixfasern noch weitere Komponenten, beispielsweise Markierungsmittel, Bindemittel und/oder übliche Zusatzstoffe, beispielsweise Spinnhilfsmittel enthalten.

Die Entwässerung der Faserdispersion unter Ausbildung des Nassvlieses kann ebenfalls auf im Bereich der Nassvliesstoffherstellung übliche Art und Weise beispielsweise durch Austragen der Mischung auf ein Sieb und Absaugen des Wassers geschehen.

Der Vliesbildung kann sich ein Trocknungs- beziehungsweise Vorverfestigungsschritt, beispielsweise über Trommeln mit Heißluft anschließen. Die Temperaturen können hierbei im Bereich von 100 bis 225° C liegen.

Der gebildete und gegebenenfalls vorverfestigte Vliesstoff kann anschließend kalandriert werden. Die Kalandrierung bewirkt ein Kompaktieren des Nassvliesstoffes und gegebenenfalls ein autogenes Verschweißen der unter den Verfestigungsbedingungen schmelzaktivierten Fasern oder Faserbestandteilen.

Die Kalandrierung erfolgt durch Hitze und Druck. Geeignete Temperaturen sind in Abhängigkeit von der Art der für die Herstellung des Nassvliesstoffs verwendeten Fasern in der Regel 100 bis 250°C.

Im Falle der Verwendung von Polyolefinfasern werden in Abhängigkeit von der jeweils eingesetzten olefinischen Faser oder Faserkomponente Kalandertemperaturen von typischerweise 100 bis 160 °C verwendet. Die Kalanderbedingungen sind ganz besonders auf das Schmelz- und Erweichungsverhalten der im Einzelfall eingesetzten Polymere abzustimmen. Beim Einsatz von Polyesterbindefasern betragen die Kalandertemperaturen typischerweise 170 bis 230 °C.

Der Kalander besteht grundsätzlich aus zwei glatten Walzen. In Einzelfällen, bei denen eine strukturierte Oberfläche gewünscht wird, kann eine Walze auch ein Prägemuster aufweisen.

Gemäß der Erfindung wird die Kalandrierung und/oder Vorverfestigung des Vliesstoffs so durchgeführt, dass ein zumindest teilweises Aufschmelzen der Bindefasern erzielt wird, wodurch sich spannsegelartige und/oder sphärische Bereiche verschmolzener Binderfasern ausbilden.

Dabei werden die Druck- und Temperaturparameter des Kalandrier- und/oder Vorverfestigungsschritts sowie dessen Dauer zweckmäßigerweise auf die Art der verwendeten Bindefasern und die gewünschte Anzahl bzw. Ausdehnung der verschmolzenen Bereiche abgestimmt.

Der erfindungsgemäße Mikrofaser-Verbundvliesstoff eignet sich hervorragend als Lichtverteilungselement. Ein weiterer Gegenstand der vorliegenden Erfindung ist eine Lichtquelle umfassend mindestens ein Beleuchtungsmittel und einen wie vorangehend beschriebenen Vliesstoff als Lichtverteilungselement.

Als Beleuchtungsmittel eignen sich insbesondere punktförmige Lichtquellen, wie LED's und/oder lineare Lichtquellen wie CCFLs "Cold Cathode Fluorescent Lamp". Dabei werden unter LED's "light emitting diode" lichtemittierende Dioden verstanden, die Licht in Wellenlängenbereichen vom Infrarot bis UV Licht emittieren können. Unter LED's sollen die verschiedensten Arten von lichtemittierenden Dioden verstanden werden einschließlich organische, anorganische oder laserbasierte Dioden.

Die erfindungsgemäße Lichtquelle kann für die verschiedensten Beleuchtungszwecke, beispielsweise zur Raumbeleuchtung und/oder Nachrichtenübermittlung dienen. Gemäß einer bevorzugten Ausführungsform der Erfindung wird die Lichtquelle zur Hintergrundbeleuchtung von Flüssigkristallbildschirmen (LCD) eingesetzt.

Im Folgenden wird die Erfindung anhand mehrerer Beispiele näher erläutert.

### Beispiel 1: Herstellung des Nassvliesstoffs 1

Der erfindungsgemäße Nassvliesstoff 1 wird in einem Nasslegeverfahren mit einem Flächengewicht von 80 g/m² aus 90 Gew.% Polyester-Copolyester-Kern/Mantelfasern 1,5 dtex/6 mm und 10 Gew.% Polyester-Matrixfasern 1,1 dtex/6 mm hergestellt. Die Verfestigung erfolgt durch Heißluft in einem Durchströmtrockner. Die Dicke wird durch Verpressen zwischen glatten Kalanderwalzen auf 110 µm eingestellt.

### Beispiel 2: Herstellung des Nassvliesstoffs 2

Der Nassvliesstoff 2 wird in einem Nasslegeverfahren mit einem Flächengewicht von 95 g/m² aus 80 Gew.% Polyolefin-Kern/Mantelfasern 1,1 dtex/4 mm und 20 Gew.% Polypropylen-Matrixfasern 0,8 dtex/5 mm hergestellt. Die Verfestigung erfolgt durch Heißluft in einem Durchströmtrockner. Die Dicke wird durch Verpressen zwischen glatten Kalanderwalzen auf 125 µm eingestellt.

Die erfindungsgemäßen Vliesstoffe zeichnen sich durch einen hohen Anteil an Bindefasern aus. Diese liegen an den Faserkreuzungen teilweise in Form spannsegelartiger und/oder sphärischer Bereiche verschmolzen vor.

### Beispiel 3: Herstellung des Vliesstoffs 3

Der Nassvliesstoff 3 wird in einem Nasslegeverfahren mit einem Flächengewicht von 100 g/m² aus 50 Gew.% amorpher Polyester-Bindefaser 1,7 dtex/12 mm und 50 Gew.% Polyester-Matrixfasern 0,5 dtex/3 mm hergestellt. Die Verfestigung erfolgt durch beheizte Kalanderwalzen, wobei gleichzeitig eine Dicke von 150 µm resultiert.

Diese Art Vliesstoff weist keine wesentlich verschmolzene Bereiche auf, sondern die Fasern kleben in ihrer ursprünglichen Form aneinander.

### Beispiel 4: Messung der Leuchtdichteverteilung der Vliesstoffe

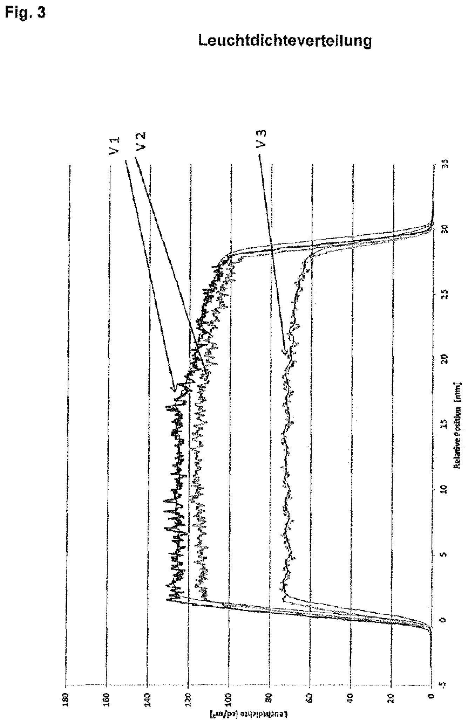

in Figur 3 ist die Leuchtdichteverteilung der erfindungsgemäßen Vliesstoffe 1 (V1) und 2 (V2) dem nicht erfindungsgemäßen Vliesstoff 3 (V3) vergleichend gegenübergestellt. Es zeigt sich deutlich, dass die erfindungsgemäßen Vliesstoffe 1 und 2 eine wesentlich höhere Leuchtdichte, nämlich um etwa 50 cd/m² höher als der nicht erfindungsgemäße Vliesstoff 3 haben.

## Patentansprüche

1. Verwendung eines Vliesstoffs umfassend
a1) 5-50 Gew.% Matrixfasern und
a2) 50-95 Gew.% zumindest teilweise thermisch verschmolzene Bindefasern,
wobei der Vliesstoff dadurch erhältlich ist, dass spannsegelartige oder sphärische Bereiche verschmolzener Bindefasern durch eine thermische Verfestigung mit Heißluft und/oder durch eine Kalandrierung des Vliesstoffs erhalten werden können, **dadurch gekennzeichnet dass** die Matrixfasern und die Bindefasern Stapelfasern sind und der Vliesstoff ein Nassvliesstoff ist, als Lichtverteilungselement..

2. Verwendung nach Anspruch 1, **dadurch gekennzeichnet, dass** die Matrixfasern Polyester, Polyamid, vorzugsweise Polyamid 6, Polyamid 66, Polyamid 46, Polyacrylnitril, Polycarbonat, Polyvinylalkohol, Polyolefin, vorzugsweise Polypropylen, Viskose und/oder Lyozell enthalten und/oder aus den vorgenannten Polymeren oder deren Gemischen bestehen.

3. Verwendung nach Anspruch 1 oder 2, **dadurch gekennzeichnet, dass** die Matrixfasern mindestens 5 Gew.%, vorzugsweise von 5 bis 10 Gew.% Mikrofasern mit einem mittleren Titer von weniger als 1 dtex, jeweils bezogen auf die Gesamtmenge an Fasern enthalten.

4. Verwendung nach einem oder mehreren der vorangehenden Ansprüche, **dadurch gekennzeichnet, dass** die Bindefasern Kern/Mantel-Fasern sind.

5. Verwendung nach einem oder mehreren der vorangehenden Ansprüche, **dadurch gekennzeichnet, dass** die Bindefasern PET-PBT-Bikomponentenfasern, PET-CoPES- Bikomponentenfasern, PEN- PET-Bikomponentenfasern und/oder Polyethylen-Polypropylen-Bikomponentenfasern sind.

6. Verwendung nach einem oder mehreren der vorangehenden Ansprüche, **dadurch gekennzeichnet, dass** der Anteil an Bindefasern von 80 bis 95 Gew.% und insbesondere von 90 bis 95 Gew.% jeweils bezogen auf das Gesamtgewicht des Vliesstoffs beträgt.

7. Verwendung nach einem oder mehreren der vorangehenden Ansprüche, **dadurch gekennzeichnet, dass** zumindest 40 % der Kreuzungspunkte von Bindefasern mit Bindefasern oder von Bindefasern mit Matrixfasern im Vliesstoff Bereiche aufweisen, in denen die Bindefasern spannsegelartig oder sphärisch verschmolzen vorliegen.

8. Verwendung nach einem oder mehreren der vorangehenden Ansprüche, **dadurch gekennzeichnet, dass** die Matrix- und/oder Bindefasern ein Mattierungsmittel, wie Titandioxid, enthalten.

9. Verwendung nach einem oder mehreren der vorangehenden Ansprüche, **dadurch gekennzeichnet, dass** der Vliesstoff eine flammhemmende Ausrüstung aufweist.

10. Verwendung nach einem oder mehreren der vorangehenden Ansprüche, **dadurch gekennzeichnet, dass** der Vliesstoff einen einschichtigen Aufbau aufweist.

11. Verwendung nach einem oder mehreren der vorangehenden Ansprüche, **dadurch gekennzeichnet, dass** die Dichte des Vliesstoffs, berechnet aus Flächengewicht und Dicke mindestens 0,4 g/cm³, beträgt.

12. Verwendung nach einem oder mehreren der vorangehenden Ansprüche, **dadurch gekennzeichnet, dass** die Luftdurchlässigkeit des Vliesstoffs gemäß EN ISO 9237 bei einem Normklima gemäß DIN 50014 / ISO 554 von 10 bis 600 dm³/s*m² bei 2 mbar beträgt.

13. Lichtquelle umfassend mindestens ein Beleuchtungsmittel und einen Vliesstoff, umfassend
a1) 5-50 Gew.% Matrixfasern und
a2) 50-95 Gew.% zumindest zum Teil verschmolzene Bindefasern wobei der Vliesstoff dadurch erhältlich ist, dass spannsegelartige oder sphärische Bereiche verschmolzener Bindefasern durch eine thermische Verfestigung mit Heißluft und/oder durch eine Kalandrierung des Vliesstoffs erhalten werden können, **dadurch gekennzeichnet dass**die Matrixfasern und Bindefasern Stapelfasern sind und der Vliesstoff ein Nassvliesstoff ist.

14. Lichtquelle nach Anspruch 13, **dadurch gekennzeichnet, dass** das Beleuchtungsmittel mindestens eine punktförmige Lichtquelle, wie LED's und/oder mindestens eine lineare Lichtquellen wie CCFLs aufweist.

## Claims

1. Method of using a nonwoven comprising
a1) 5-50 wt% of matrix fibres and
a2) 50-95 wt% of at least partly thermally fused binding fibres,
wherein the nonwoven is obtainable in that regions of fused binding fibres that are spherical or akin to stretched sails can be obtained by thermal consolidation with hot air and/or by calendering of the nonwoven, **characterized in that**
the matrix fibres and the binding fibres are staple fibres and the nonwoven is a wet-laid nonwoven, as a light diffusion element.

2. Method according to Claim 1, **characterized in that** the matrix fibres contain and/or consist of polyester, polyamide, preferably nylon 6, nylon 66, nylon 46, polyacrylonitrile, polycarbonate, polyvinyl alcohol, polyolefin, preferably polypropylene, viscose and/or lyocell, or mixtures thereof.

3. Method according to Claim 1 or 2, **characterized in that** the matrix fibres contain not less than 5 wt%, preferably from 5 to 10 wt% of microfibres having an average linear density of less than 1 dtex, all based on the total amount of fibres.

4. Method according to one or more of the preceding claims, **characterized in that** the binding fibres are sheath-core fibres.

5. Method according to one or more of the preceding claims, **characterized in that** the binding fibres are PET-PBT bicomponent fibres, PET-CoPES bicomponent fibres, PEN-PET bicomponent fibres and/or polyethylene-polypropylene bicomponent fibres.

6. Method according to one or more of the preceding claims, **characterized in that** the proportion of binding fibres is from 80 to 95 wt% and particularly from 90 to 95 wt% all based on the total weight of the nonwoven.

7. Method according to one or more of the preceding claims, **characterized in that** not less than 40% of the crossing points of binding fibres with binding fibres or of binding fibres with matrix fibres in the nonwoven comprise regions wherein the fused binding fibres are spherical or akin to stretched sails.

8. Method according to one or more of the preceding claims, **characterized in that** the matrix and/or binding fibres contain a delusterant, such as titanium dioxide.

9. Method according to one or more of the preceding claims, **characterized in that** the nonwoven has a flame-retardant finish.

10. Method according to one or more of the preceding claims, **characterized in that** the nonwoven has a single-layered construction.

11. Method according to one or more of the preceding claims, **characterized in that** the density of the nonwoven computes from basis weight and thickness to not less than 0.4 g/cm³.

12. Method according to one or more of the preceding claims, **characterized in that** the air permeability of the nonwoven as per EN ISO 9237 in a standard atmosphere as per DIN 50014/ISO 554 is from 10 to 600 dm³/s*m² at 2 mbar.

13. Light source comprising at least an illuminant and a nonwoven comprising
a1) 5-50 wt% of matrix fibres and
a2) 50-95 wt% of at least partly thermally fused binding fibres,
wherein the nonwoven is obtainable in that regions of fused binding fibres that are spherical or akin to stretched sails can be obtained by thermal consolidation with hot air and/or by calendering of the nonwoven, **characterized in that** the matrix fibres and binding fibres are staple fibres and the nonwoven is a wet-laid nonwoven.

14. Light source according to Claim 13, **characterized in that** the illuminant comprises at least one point-shaped light source, such as an LED, and/or at least one linear light source such as a CCFL.

## Revendications

1. Utilisation, en tant qu'élément diffuseur de lumière, d'un non-tissé comprenant
a1) 5 à 50 % en poids de fibres de matrice et
a2) 50 à 95 % en poids de fibres de liaison au moins partiellement thermiquement fusionnées,
le non-tissé pouvant être obtenu par le fait que des zones sphériques ou en forme de voile tendue de fibres de liaison fusionnées peuvent être obtenues par une solidification thermique à l'air chaud et/ou par un calandrage du non-tissé,
**caractérisée en ce que** les fibres de matrice et les fibres de liaison sont des fibres coupées et que le non-tissé est un non-tissé par voie humide.

2. Utilisation selon la revendication 1, **caractérisée en ce que** les fibres de matrice contiennent un polyester, un polyamide, de préférence le polyamide 6, le polyamide 66, le polyamide 46, un polyacrylonitrile, un polycarbonate, un poly(alcool vinylique), une polyoléfine, de préférence le polypropylène, la viscose et/ou le Lyocell et/ou sont constituées des polymères mentionnés ci-dessus ou de leurs mélanges.

3. Utilisation selon la revendication 1 ou 2, **caractérisée en ce que** les fibres de matrice contiennent au moins 5 % en poids, de préférence 5 à 10 % en poids de microfibres ayant un titre moyen inférieur à 1 dtex, dans chaque cas par rapport à la quantité totale des fibres.

4. Utilisation selon l'une ou plusieurs des revendications précédentes, **caractérisée en ce que** les fibres de liaison sont des fibres cœur/gaine.

5. Utilisation selon l'une ou plusieurs des revendications précédentes, **caractérisée en ce que** les fibres de liaison sont des fibres bicomposants PET-PBT, des fibres bicomposants PET-CoPES, des fibres bicomposants PEN-PET et/ou des fibres bicomposants polyéthylène-polypropylène.

6. Utilisation selon l'une ou plusieurs des revendications précédentes, **caractérisée en ce que** la proportion des fibres de liaison est de 80 à 95 % en poids et en particulier de 90 à 95 % en poids, dans chaque cas par rapport au poids total du non-tissé.

7. Utilisation selon l'une ou plusieurs des revendications précédentes, **caractérisée en ce qu'**au moins 40 % des points d'intersection des fibres de liaison avec des fibres de liaison ou des fibres de liaison avec des fibres de matrice présentent dans le non-tissé des zones dans lesquelles les fibres de liaison se présentent fusionnées en forme de voile tendue ou sphériques.

8. Utilisation selon l'une ou plusieurs des revendications précédentes, **caractérisée en ce que** les fibres de matrice et/ou de liaison contiennent un agent de matité tel que le dioxyde de titane.

9. Utilisation selon l'une ou plusieurs des revendications précédentes, **caractérisée en ce que** le non-tissé comprend un apprêt retardateur de flamme.

10. Utilisation selon l'une ou plusieurs des revendications précédentes, **caractérisée en ce que** le non-tissé a une structure monocouche.

11. Utilisation selon l'une ou plusieurs des revendications précédentes, **caractérisée en ce que** la masse volumique du non-tissé, calculée à partir de la masse surfacique et de l'épaisseur, est d'au moins 0,4 g/cm³.

12. Utilisation selon l'une ou plusieurs des revendications précédentes, **caractérisée en ce que** la perméabilité à l'air du non-tissé selon EN ISO 9237 pour une atmosphère normale selon DIN 50014/ISO 554 est de 10 à 600 dm³/s*m² sous 2 mbar.

13. Source de lumière comprenant au moins un moyen d'éclairage et un non-tissé, comprenant
a1) 5 à 50 % en poids de fibres de matrice et
a2) 50 à 95 % en poids de fibres de liaison au moins partiellement thermiquement fusionnées, le non-tissé pouvant être obtenu par le fait que des zones sphériques ou en forme de voile tendue de fibres de liaison fusionnées peuvent être obtenues par une solidification thermique à l'air chaud et/ou par un calandrage du non-tissé,
**caractérisée en ce que** les fibres de matrice et les fibres de liaison sont des fibres coupées et que le non-tissé est un non-tissé par voie humide.

14. Source de lumière selon la revendication 13, **caractérisée en ce que** le moyen d'éclairage comprend au moins une source de lumière ponctuelle, telle que des LED et/ou au moins une source de lumière linéaire telle que des CCFL.
